# EUROPEAN PATENT APPLICATION

(11) **EP 2 833 654 A1**
(43) Date of publication of application: **04.02.2015**
(21) Application number: 12872914.2
(22) Date of filing: 26.03.2012
(51) Int. Cl.: H04W 4/06

(54) **MEASUREMENT REPORT TRANSMISSION METHOD AND USER EQUIPMENT**

(71) Applicant: Fujitsu Limited, Kawasaki-shi, Kanagawa 211-8588 (JP)
(72) Inventor: WANG, Weiwei, Beijing 100025 (CN); ZHOU, Hua, Beijing 100025 (CN)
(74) Representative: Schultes, Stephan
(86) International application number: PCT/CN2012/073031
(87) International publication number: WO 2013/143052

(57) **Abstract**

Embodiments of the present application provide a method for transmitting a measurement report and user equipment. The method for transmitting a measurement report including: delaying or not transmitting, by user equipment, a measurement report of a first frequency when performing handover; wherein the first frequency does not provide a multimedia broadcast multicast service that the user equipment is interested in. With the embodiments of the present application, a measurement report of a frequency providing an MBMS in which user equipment is interested may be transmitted first, thereby well guaranteeing continuity of the MBMS.

## Description

### Technical Field

The present disclosure relates to the field of communications, and in particular to a method for transmitting a measurement report and user equipment.

### Background

Currently, the 3th Generation Partnership Project (3GPP) Organization has been on the study of the 4th generation (4G) mobile communication system, such as a long-term evolution advanced (LTE-A) system.

In a base station of the Rel-11, continuity of a multimedia broadcast multicast service (MBMS) of user equipment of the Rel-11 may be guaranteed. In particular, continuity of the MBMS may be provided to the user equipment of the Rel-11 in the base station of the Rel-11. Particularly, the user equipment of the Rel-11 and the base station of the Rel-11 mutually provide information on the MBMS, so that the base station of the Rel-11 may learn what the user equipment of the Rel-11 is interested in, thereby accurately handing over it to a suitable base station.

However, the inventor found that, in the implementation of the present disclosure, continuity of an MBMS when user equipment of the Rel-11 is handed over between base stations of pre-Rel-11 (such as Rel-10 or earlier releases), or the user equipment is handed over from a base station of pre-Rel-11 to a base station of the Rel-11, is not taken into account in an existing mechanism. In a base station of pre-Rel-11, some information related to continuity of an MBMS transmitted by user equipment of the Rel-11 to it cannot be understood; hence, continuity of the MBMS cannot be well guaranteed.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

Embodiments of the present disclosure provide a method for transmitting a measurement report and user equipment, with an object being to well guarantee continuity of an MBMS when user equipment is handed over.

According to an embodiment of the present disclosure, there is provided a method for transmitting a measurement report, including:
delaying or not transmitting, by user equipment, a measurement report of a first frequency when performing handover; wherein the first frequency does not provide a multimedia broadcast multicast service that the user equipment is interested in.

According to another embodiment of the present disclosure, there is provided user equipment, including:
a first transmitting unit, configured to delay or not transmit a measurement report of a first frequency when the user equipment performs handover; wherein the first frequency does not provide a multimedia broadcast multicast service that the user equipment is interested in.

According to a further embodiment of the present disclosure, there is provided a computer-readable program, wherein when the program is executed in user equipment, the program enables a computer to carry out the method for transmitting a measurement report as described above in the user equipment.

According to still another embodiment of the present disclosure, there is provided a storage medium in which a computer-readable program is stored, wherein the computer-readable program enables a computer to carry out the method for transmitting a measurement report as described above in user equipment.

An advantage of the embodiments of the present disclosure resides in that a measurement report of a frequency providing an MBMS in which user equipment is interested may be transmitted first, by delaying or not transmitting the measurement report of the frequency not providing the MBMS in which the user equipment is interested when the user equipment is handed over, thereby well guaranteeing continuity of the MBMS.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including/comprises/comprising" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced in size.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
Figure 1 is a schematic diagram of user equipment of Rel-11 being handed over between base stations of Rel-10;
Figure 2 is a flowchart of the method for transmitting a measurement report of an embodiment of the present disclosure;
Figure 3 is another flowchart of the method for transmitting a measurement report of an embodiment of the present disclosure;
Figure 4 is a further flowchart of the method for transmitting a measurement report of an embodiment of the present disclosure;
Figure 5 is still another flowchart of the method for transmitting a measurement report of an embodiment of the present disclosure;
Figure 6 is a schematic diagram of the structure of user equipment of an embodiment of the present disclosure; and
Figure 7 is another schematic diagram of the structure of user equipment of an embodiment of the present disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In these embodiments, description is given taking user equipment of Rel-11 and base stations of Rel-10 only. However, it should be noted that the present disclosure is not limited thereto, and is applicable to former or later releases. A base station in the present disclosure may be a base station of a macro cell, a base station of a pico cell, or a remote radio head (RRH), which may be determined according to an actual situation.

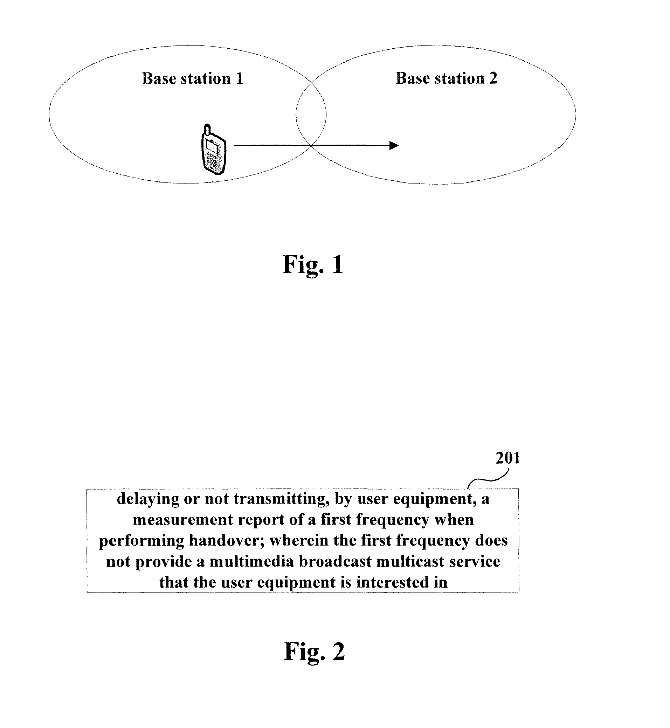

Fig. 1 is a schematic diagram of user equipment of Rel-11 being handed over between base stations of Rel-10; wherein, an MBMS of the user equipment of Rel-11 operates at a frequency *f*₁, and when the user equipment is handed over from a base station 1 to a base station 2, an MBMS received by the user equipment may be interrupted during the handover, as the base station 1 and the base station 2 cannot ensure continuity of the MBMS.

The present disclosure provides a method for transmitting a measurement report. Fig. 2 is a flowchart of the method for transmitting a measurement report of the embodiment of the present disclosure. As shown in Fig. 2, the method includes:
step 201: delaying or not transmitting, by user equipment, a measurement report of a first frequency when performing handover; wherein the first frequency does not provide a multimedia broadcast multicast service that the user equipment is interested in.

In this embodiment, when the user equipment performs handover, it may be handed over from a source base station to a target base station, and may also be handed over between different frequencies in a base station. However, it is not limited thereto, and a particular scenario may be determined according to an actual situation.

In this embodiment, the first frequency may be one or more than one, and the user equipment may measure multiple frequencies; wherein, the MBMS operates at frequency *f*₁ (a second frequency); furthermore, there may be one or more frequencies (a first frequency) not providing an MBMS in which the user equipment is interested, such as *f*₂, *f*₃ ....

In this embodiment, for these frequencies *f*₂, *f*₃ ..., the user equipment will delay or not transmit measurement reports of these frequencies even if a triggering condition of measurement reports is satisfied, rather than transmit them. Therefore, the measurement report of the frequency *f*₁ providing the MBMS in which the user equipment is interested is transmitted first, and handover is performed based on the frequency *f*₁, thereby guarantee continuity of the MBMS.

In this embodiment, the triggering condition of the measurement report may be, for example, M_{target}>M_{source}+Offset; where, M_{target} denotes signal strength or signal quality (such as a signal to noise ratio, and a signal to interference plus noise ratio, etc.) of a target cell, M_{source} denotes signal strength or signal quality (such as a signal to noise ratio, and a signal to interference plus noise ratio, etc.) of a source cell, and Offset denotes an offset. The relevant art may be referred to, which shall not be described herein any further.

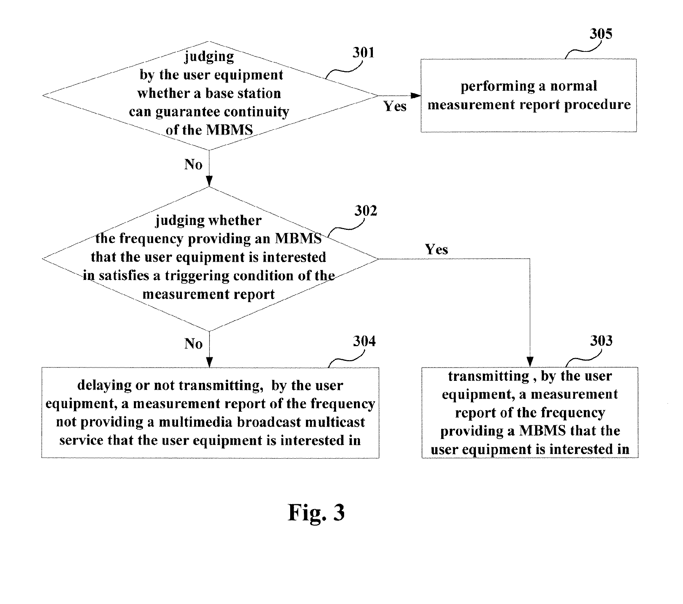

Fig. 3 is another flowchart of the method for transmitting a measurement report of an embodiment of the present disclosure. As shown in Fig. 3, the method includes:
step 301: judging, by the user equipment, whether a base station can guarantee continuity of the MBMS; executing step 302 when the continuity of the MBMS cannot be guaranteed; and executing step 305 when the continuity of the MBMS can be guaranteed;
in this embodiment, the base station may be a base station where the user equipment is present when it is handed over within the same base station, and may also be a source base station when the user equipment is handed over from the source base station to a target base station; and a particular structure may be determined according to an actual situation;
in this embodiment, the user equipment may judge from the information transmitted by the base station whether the continuity of the MBMS can be guaranteed; for example, if the base station is a base station of Rel-11, it may transmit some information that cannot be transmitted by a base station of pre-Rel-11 (such as information providing an MBMS);
hence, if the user equipment of Rel-11 can receive these information, it may be judged that the base station is a base station of Rel-11, and the continuity of the MBMS can be guaranteed; and if the user equipment of Rel-11 does receive these information, it may be judged that the base station is a base station of pre-Rel-11, and the continuity of the MBMS cannot be guaranteed;
step 302: judging, by the user equipment, whether the second frequency satisfies a triggering condition of the measurement report when performing handover; wherein the second frequency provides an MBMS that the user equipment is interested in; executing step 303 if the second frequency satisfies the triggering condition of the measurement report; and executing step 304 if the second frequency does not satisfy the triggering condition of the measurement report;
step 303: transmitting immediately, by the user equipment, a measurement report of the second frequency;
in this embodiment, following principle may be obeyed in deciding whether to transmit immediately the measurement report of the frequency: (1) the frequency provides an MBMS that the user equipment is interested in; and (2) a measurement result of the frequency satisfies the triggering condition of the measurement report;
in a mode of implementation, alternatively, the user equipment may further set that a priority level of the MBMS is higher than a priority level of a unicast service; hence, a condition for triggering the second frequency *f*₁ is more strict;
in another mode of implementation, the user equipment may only transmit immediately the measurement report of the second frequency when the first frequency and the second frequency satisfy the triggering condition of the measurement report at the same time; in the relevant art, measurement reports of multiple frequencies are transmitted at the same time when the multiple frequencies satisfy a triggering condition of a measurement report; the present disclosure differs from this in that the measurement report of the second frequency *f*₁ is only transmitted immediately even though multiple frequencies satisfy the triggering condition of the measurement report, thereby well guaranteeing continuity of the MBMS;
step 304: delaying or not transmitting, by the user equipment, a measurement report of the first frequency; wherein the first frequency does not provide a multimedia broadcast multicast service that the user equipment is interested in;
step 305: performing a normal measurement report procedure.

Therefore, the measurement report of the frequency providing the MBMS in which the user equipment is interested is transmitted first, thereby well guaranteeing continuity of the MBMS.

Furthermore, if the second frequency providing the MBMS in which the user equipment is interested does not satisfy the triggering condition of the measurement report, the user equipment is needed to perform further processing.

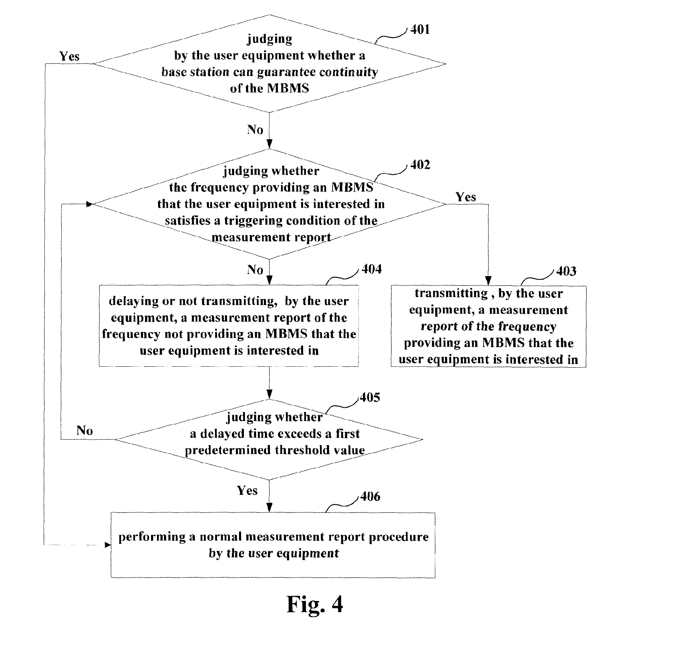

Fig. 4 is a further flowchart of the method for transmitting a measurement report of an embodiment of the present disclosure. As shown in Fig. 4, the method includes:
step 401: judging, by the user equipment, whether a base station can guarantee continuity of the MBMS; executing step 402 when the continuity of the MBMS cannot be guaranteed; and executing step 406 when the continuity of the MBMS can be guaranteed;
step 402: judging, by the user equipment, whether the second frequency satisfies a triggering condition of the measurement report when performing handover; wherein the second frequency provides an MBMS that the user equipment is interested in; executing step 403 if the second frequency satisfies the triggering condition of the measurement report; and executing step 404 if the second frequency does not satisfy the triggering condition of the measurement report;
step 403: transmitting immediately, by the user equipment, a measurement report of the second frequency;
step 404: delaying or not transmitting, by the user equipment, a measurement report of the first frequency; wherein the first frequency does not provide a multimedia broadcast multicast service that the user equipment is interested in;
step 405: judging, by the user equipment, whether a delayed time exceeds a first predetermined threshold value; executing step 406 if the delayed time exceeds the first predetermined threshold value; and executing step 402 if the delayed time does not exceed the first predetermined threshold value;
step 406: performing, by the user equipment, a normal measurement report procedure.

For example, if a triggering condition of a measurement report of a certain first frequency is satisfied, a measurement report of the first frequency is transmitted.

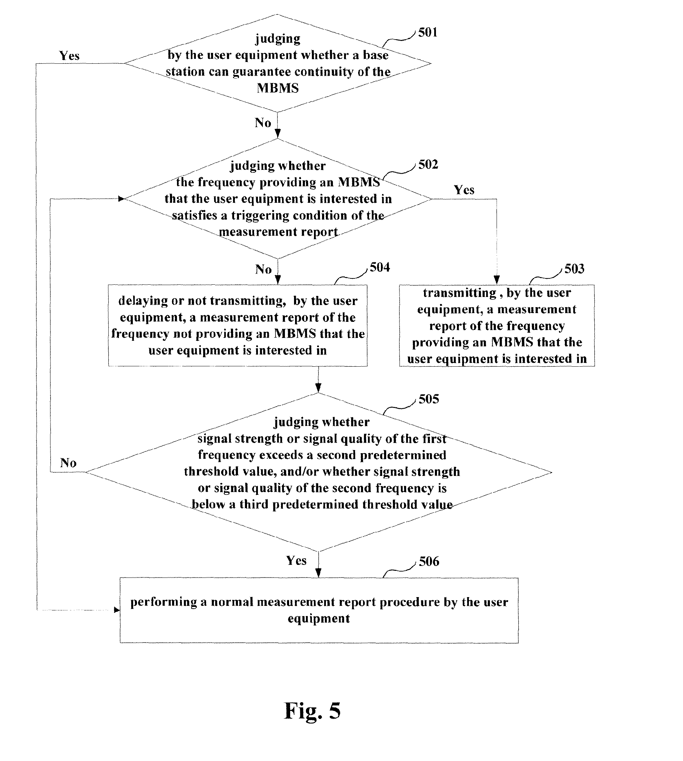

Fig. 5 is still another flowchart of the method for transmitting a measurement report of an embodiment of the present disclosure. As shown in Fig. 5, the method includes:
step 501: judging, by the user equipment, whether a base station can guarantee continuity of the MBMS; executing step 502 when the continuity of the MBMS cannot be guaranteed; and executing step 506 when the continuity of the MBMS can be guaranteed;
step 502: judging, by the user equipment, whether the second frequency satisfies a triggering condition of the measurement report when performing handover; wherein the second frequency provides an MBMS that the user equipment is interested in; executing step 503 if the second frequency satisfies the triggering condition of the measurement report; and executing step 504 if the second frequency does not satisfy the triggering condition of the measurement report;
step 503: transmitting immediately, by the user equipment, a measurement report of the second frequency;
step 504: delaying or not transmitting, by the user equipment, a measurement report of the first frequency; wherein the first frequency does not provide a multimedia broadcast multicast service that the user equipment is interested in;
step 505: judging whether signal strength or signal quality (such as a signal to noise ratio, and a signal to interference plus noise ratio, etc.) of the first frequency exceeds a second predetermined threshold value, and/or whether signal strength or signal quality (such as a signal to noise ratio, and a signal to interference plus noise ratio, etc.) of the second frequency is below a third predetermined threshold value; and executing step 506 if a judgment result is yes; otherwise, executing step 502;
in this embodiment, if the signal strength or signal quality of the first frequency exceeds the second predetermined threshold value, it may show that frequencies *f*₂, *f*₃ ..., etc., are relatively important, and at this moment, it may need to interrupt the MBMS; or if the signal strength or signal quality of the second frequency is below the third predetermined threshold value, it may show that the measurement result of the frequency *f*₁ is relatively poor, and this frequency is not suitable for providing an MBMS any longer, and at this moment, it may also need to interrupt the MBMS;
step 506: performing, by the user equipment, a normal measurement report procedure.

It can be seen from the above embodiment that a measurement report of a frequency providing an MBMS in which user equipment is interested may be transmitted first, by delaying or not transmitting the measurement report of the frequency not providing the MBMS in which the user equipment is interested when the user equipment is handed over, thereby well guaranteeing continuity of the MBMS.

An embodiment of the present disclosure further provides user equipment, in which the contents identical to those of the above embodiment being not going to be described herein any further.

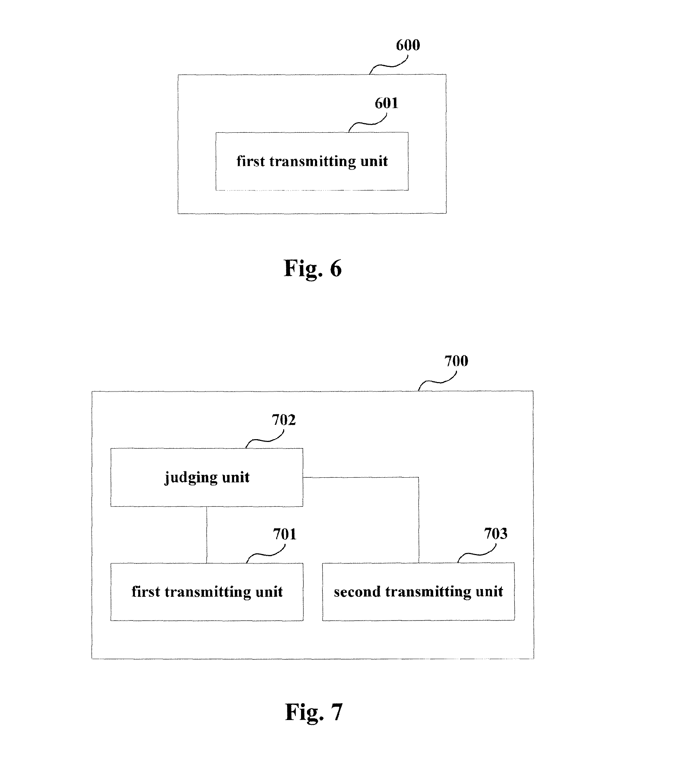

Fig. 6 is a schematic diagram of the structure of user equipment of an embodiment of the present disclosure. As shown in Fig. 6, the user equipment 600 includes a first transmitting unit 601; wherein, the relevant art may be referred to for other of the user equipment 600, which shall not be described herein any further;
wherein, the first transmitting unit 601 is configured to delay or not transmit a measurement report of a first frequency when the user equipment performs handover; wherein the first frequency does not provide a multimedia broadcast multicast service that the user equipment is interested in.

In this way, a measurement report of a frequency providing an MBMS in which user equipment is interested may be transmitted first, thereby well guaranteeing continuity of the MBMS.

Fig. 7 is another schematic diagram of the structure of user equipment of an embodiment of the present disclosure. As shown in Fig. 7, the user equipment 700 includes a first transmitting unit 701; and furthermore, the user equipment 700 may include a judging unit 702;
wherein, the judging unit 702 is configured to judge whether a base station can guarantee continuity of the MBMS; and the first transmitting unit 701 is further configured to delay or not transmit the measurement report of the first frequency when the base station cannot guarantee the continuity of the MBMS.

In particular implementation, the base station may be a base station of 3GPP Rel-10 or earlier, and the user equipment may be user equipment of Rel-11.

As shown in Fig. 7, the user equipment may further include: a second transmitting unit 703 configured to transmit immediately a measurement report of a second frequency when the second frequency satisfies a triggering condition of the measurement report; wherein the second frequency provides an MBMS that the user equipment is interested in.

In a mode of implementation, the user equipment may further include: a priority level setting unit configured to set that a priority level of the MBMS is higher than a priority level of a unicast service.

In another mode of implementation, the second transmitting unit 703 is further configured to transmit immediately only the measurement report of the second frequency when the first frequency and the second frequency satisfy the triggering condition of the measurement report at the same time.

Furthermore, the first transmitting unit 701 is configured to transmit the measurement report of the first frequency when a delayed time exceeds a predefined first threshold value; or the first transmitting unit 701 is further configured to transmit the measurement report of the first frequency when signal strength or signal quality of the first frequency is higher than a predefined second threshold value, and/or the signal strength or signal quality of the second frequency is lower than a predefined third threshold value.

It can be seen from the above embodiment that a measurement report of a frequency providing an MBMS in which user equipment is interested may be transmitted first, by delaying or not transmitting the measurement report of the frequency not providing the MBMS in which the user equipment is interested when the user equipment is handed over, thereby well guaranteeing continuity of the MBMS.

An embodiment of the present disclosure further provides a computer-readable program, wherein when the program is executed in user equipment, the program enables a computer to carry out the method for transmitting a measurement report as described above in the user equipment.

An embodiment of the present disclosure further provides a storage medium in which a computer-readable program is stored, wherein the computer-readable program enables a computer to carry out the method for transmitting a measurement report as c described above in user equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figs. 13-20 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

## Claims

1. A method for transmitting a measurement report, comprising:
delaying or not transmitting, by user equipment, a measurement report of a first frequency when performing handover; wherein the first frequency does not provide a multimedia broadcast multicast service that the user equipment is interested in.

2. The method according to claim 1, wherein the method further comprises:
judging, by the user equipment, whether a base station is capable of guaranteeing continuity of the multimedia broadcast multicast service; and
delaying or not transmitting the measurement report of the first frequency when the base station is not capable of guaranteeing the continuity of the multimedia broadcast multicast service.

3. The method according to claim 1 or 2, wherein the method further comprises:
transmitting immediately, by the user equipment, a measurement report of a second frequency when the second frequency satisfies a triggering condition of the measurement report; wherein the second frequency provides a multimedia broadcast multicast service that the user equipment is interested in.

4. The method according to claim 3, wherein the method further comprises:
setting, by the user equipment, that a priority level of the multimedia broadcast multicast service is higher than a priority level of a unicast service.

5. The method according to claim 3, wherein the method further comprises:
transmitting immediately only, by the user equipment, the measurement report of the second frequency when the first frequency and the second frequency satisfy the triggering condition of the measurement report at the same time.

6. The method according to claim 1 or 2, wherein the method further comprises:
transmitting, by the user equipment, the measurement report of the first frequency when a delayed time exceeds a predefined first threshold value.

7. The method according to claim 1 or 2, wherein the method further comprises:
transmitting, by the user equipment, the measurement report of the first frequency when signal strength or signal quality of the first frequency is higher than a predefined second threshold value, and/or signal strength or signal quality of the second frequency is lower than a predefined third threshold value.

8. User equipment, comprising:
a first transmitting unit configured to delay or not transmit a measurement report of a first frequency when the user equipment performs handover; wherein the first frequency does not provide a multimedia broadcast multicast service that the user equipment is interested in.

9. The user equipment according to claim 8, wherein the user equipment further comprises:
a judging unit configured to judge whether a base station is capable of guaranteeing continuity of the multimedia broadcast multicast service;
and the first transmitting unit is further configured to delay or not transmit the measurement report of the first frequency when the base station is not capable of guaranteeing the continuity of the multimedia broadcast multicast service.

10. The user equipment according to claim 9, wherein the base station is a base station of the 3GPP Rel 10 version or earlier.

11. The user equipment according to claim 8 or 9, wherein the user equipment further comprises:
a second transmitting unit configured to transmit immediately a measurement report of a second frequency when the second frequency satisfies a triggering condition of the measurement report; wherein the second frequency provides a multimedia broadcast multicast service that the user equipment is interested in.

12. The user equipment according to claim 11, wherein the user equipment further comprises:
a priority level setting unit configured to set that a priority level of the multimedia broadcast multicast service is higher than a priority level of a unicast service.

13. The user equipment according to claim 11, wherein the second transmitting unit is further configured to transmit immediately the measurement report of the second frequency when the first frequency and the second frequency satisfy the triggering condition of the measurement report at the same time.

14. The user equipment according to claim 8 or 9, wherein the first transmitting unit is further configured to transmit the measurement report of the first frequency when a delayed time exceeds a predefined first threshold value.

15. The user equipment according to claim 8 or 9, wherein the first transmitting unit is further configured to transmit the measurement report of the first frequency when signal strength or signal quality of the first frequency is higher than a predefined second threshold value, and/or the signal strength or signal quality of the second frequency is lower than a predefined third threshold value.

16. A computer-readable program, wherein when the program is executed in user equipment, the program enables a computer to carry out the method for transmitting a measurement report as claimed in any one of claims 1-7 in the user equipment.

17. A storage medium in which a computer-readable program is stored, wherein the computer-readable program enables a computer to carry out the method for transmitting a measurement report as claimed in any one of claims 1-7 in user equipment.
